# EUROPÄISCHE PATENTSCHRIFT

(11) **EP 0 233 454 B1**
(45) Veröffentlichungstag und Bekanntmachung des Hinweises auf die Patenterteilung: **06.04.1994**
(21) Anmeldenummer: 87100161.6
(22) Anmeldetag: 08.01.1987
(51) Int. Cl.: A22C 25/17

(54) **Vorrichtung zum Enthäuten von Fischen**
Device for skinning fish
Machine à dépouiller le poisson

(30) Priorität: 20.02.1986 DE 3605414
(43) Veröffentlichungstag der Anmeldung: 26.08.1987
(73) Patentinhaber: NORDISCHER MASCHINENBAU RUD. BAADER GMBH + CO KG, 23560 Lübeck (DE)
(72) Erfinder: Braeger, Horst, D-2400 Lübeck (DE); Brocksch, Rainer, D-2400 Lübeck (DE); Groth, Peter, Dipl.-Ing., D-2418 Ratzeburg (DE)

(56) Entgegenhaltungen:
- EP-A- 0 018 275
- EP-A- 0 093 318
- DE-A- 2 118 164
- DE-B- 2 642 507
- DE-B- 2 653 571
- DE-C- 680 720
- DE-C- 1 810 673
- FR-A- 725 683
- FR-A- 1 111 960
- GB-A- 623 592
- GB-A- 1 557 952
- US-A- 1 376 810
- US-A- 1 847 536
- US-A- 1 867 133
- US-A- 1 921 440
- US-A- 3 280 869
- US-A- 3 659 639
- US-A- 3 892 010

## Beschreibung

Die Erfindung geht aus von einer Vorrichtung zum Abtragen einer die Haut einschließenden Schicht von den Filets von Fischen, mit einer umlaufend angetriebenen, an ihrer Mantelfläche griffig ausgebildeten Enthäutewalze, mit einem mit seiner Schneide gegen die Drehrichtung der Enthäutewalze weisenden, der Mantelfläche der Enthäutewalze gegenüberstehenden, oszillierend angetriebenen Enthäutemesser und mit einem in Umlaufrichtung der Enthäutewalze hinter der Schneide des Enthäutemessers angeordneten Andrückschuh mit einer der Mantelfläche der Enthäutewalze gegenüberstehenden Andrückfläche.

Vorrichtungen mit diesen und ähnlichen Konstruktionsmerkmalen sind vielfach in praktischem Einsatz und auch druckschriftlich bekannt. So ist beispielsweise in der DE-C 18 10 673 eine Vorrichtung beschrieben, deren Baumerkmale der durch den Erfindungsbetreff gegebenen Beschreibung entsprechen. Diese Ausführung weist ein oszillierendes Enthäutemesser auf, dessen Schwenkmöglichkeit einstellbar und so begrenzt ist, daß es gegenüber der Mantelfläche der Enthäutewalze in fest eingestelltem Abstand bleibt. Unter dem Enthäutemesser befindet sich ein Andrückschuh, welcher in festem Abstand zu dem Umfang der Enthäutewalze angeordnet ist. Beim Einsatz dieser Vorrichtung zeigt sich insbesondere bei der Bearbeitung von Filets von Flachfischen ein Nachteil, der in dem Grundkonzept begründet liegt. Dieser äußert sich darin, daß sich der Schwanzbereich längs der Rückgratlinie spaltet, so daß das enthäutete Filet ein schwalbenschwanzförmiges Aussehen erhält, was als derartige Qualitätsbeeinträchtigung gilt, daß dieser Maschine der Durchbruch auf diesem Sektor versagt blieb. Die Ursache für diese Spaltung liegt in einer Querbeanspruchung des Filets während des Enthäutens, welche dadurch zustandekommt, daß die enthäuteten Filetteile gegen die oszillierende Rückenfläche gedrängt und entsprechendderen Oszillationsbewegung mit beschleunigt werden. Dieser Effekt findet Unterstützung durch den vor der Andrückfläche freiliegenden Teil der Unterfläche des Messers, wobei die Keilwirkung und der Schnittwiderstand für einen ausreichend innigen Reibschluß zwischen Messer und Filet sorgen, um die Übertragung der Oszillationsbewegung auf das Filet zu bewirken. Um diesen Effekt durch besseren Halt der Haut auf der Enthäutewalze zu mindern, wurde die Mantelfläche derselben mit einer Kordelung oder Kreuzrändelung versehen. Dabei zeigte sich aber neben einer kaum registrierbaren Verbesserung des o. g. Effektes eine Verschlechterung der Anschnittsicherheit, weil nun der Abstand der Andrückfläche zu der Mantelfläche der Enthäutewalze mindestens auf die Hautstärke des zu enthäutenden Filets eingestellt werden mußte, um zu erreichen, daß die Haut unter die Andrückfläche gelangte.Die sich dabei ergebende Spaltweite mindert aber die für eine sichere Förderung ererforderliche Anpreßwirkung gegenüber der Enthäutewalze. Um die aus den genannten Gründen erforderliche Engstellung der Andrückfläche zu ermöglichen, werden daher heute die Mantelflächen der Enthäutewalzen mit Längsnuten versehen, in welche sich das Filet mit seinem Schwanzende einlagern und so unter die Andrückfläche gelangen kann.

Auch Versuche mit einer Vorrichtung gemäß der DE-OS 21 18 164 mit einem durch Einlauf des Filets in den Spalt zwischen Enthäutewalze und Andrückschuh in Arbeitstellung bringbaren oszillierenden Enthäutemessers mit-reduziertem Schaltweg halfen aus dieser Problematik nicht heraus, so daß auch dieses Konzept keine kommerzielle Umsetzung erfuhr. Neben der aus der Oszillation resultierenden Strapazierung der Filets, zeigte sich bei dieser Vorrichtung überdurchschnittliche Unsicherheit im Abschnitt. Das entspricht den Erwartungen aus den oben dargelegten Erkenntnissen und ist danach in erster Linie darauf zurückzuführen, daß die Andrückfläche in ihrer Grundstellung dem ankommenden Filet einen größeren Abstand zu der Umfangsfläche der Enthäutewalze darbietet als in der Arbeitstellung. Eine Versetzung des Andrückschuhes in die Arbeitstellung kommt daher nur zufallsweise zustande, denn dazu ist erforderlich, daß das Filet eine ausreichende Mitnahme durch die Enthäutewalze erfährt. Diese Mitnahme erfolgt aber noch bei Ankunft des Filets an der Messerschneide lediglich durch reibschlüssigen und schiebenden Angriff der durch Kordelung oder dgl. aufgerauhten Umfangsfläche der Enthäutewalze. Diese Förderart reicht jedoch im Regelfall nicht aus, um mittels des Messers eine Einschnittiefe zu erzielen, die die abgetrennte Schicht den Klemmpunkt zwischen Andrückfläche und Umfangsfläche der Enthäutewalze erreichen läßt. Das aber ist Voraussetzung dafür, daß an dem Zwischenrad ein ausreichendes Drehmoment wirksam wird, um das Messer in die umfangsnahe Arbeitsstellung und die den eigentlichen Enthäuteprozeß ermöglichende formschlüssige Förderung zustande zu bringen.

Es ist die Aufgabe der Erfindung, eine universell einsetzbare Enthäutevorrichtung vorzuschlagen, mit welcher sich auch Filets von Flachfischen problemlos unter Erzielung einwandfreier Qualität enthäuten lassen.

Diese Aufgabe wird erfindungsgemäß dadurch gelöst, daß der Andrückschuh bezüglich des Abstandes der Andrückfläche zu der Mantelfläche der Enthäutewalze zwischen einstellbaren Anschlägen bewegbar ist und gegen die Kraft einer Feder, die ihn in Richtung auf die Enthäutewalze belastet und vor dem Durchgang eines Filets an einem der Anschläge in seiner Grundstellung hält, durch das abgetrennte Hautteil des Filets von dieser Grundstellung verdrängbar ist , und daß das Enthäutemesser als Messerklinge ausgebildet ist, die in einem Führungsschlitz geführt ist, der Bestandteil des Andrückschuhs ist und aus dem die Messerklinge mit seiner Schneide vorsteht, wodurch nur ein kleiner Teil der oszillierenden Flächen des Messers angreift.

Die damit erzielbaren Vorteile bestehen insbesondere darin, daß die Angriffsmöglichkeiten der oszillierenden Flächen des Messers an dem Filet entscheidend reduziert sind. Darüberhinaus ermöglicht dieses Konzept aufgrund der geringen schwingenden Massen eine Erhöhung der Oszillationsfrequenz und/oder der Amplitude mit dem Effekt einer höheren mittleren Schneidgeschwindigkeit, die eine weitere Minderung der das Filet strapazierenden Querkräfte mitsichbringt.
Dabei können einerseits die Grundstellung der Andrückfläche gegenüber der Mantelfläche der Enthäutewalze ganz nach dem Gesichtspunkt eines sicheren Anschnittes gewählt, andererseits der Auftriebsweg des Andrückschuhes begrenzt werden.

Zum Zwecke der Vermittlung einer genauen Führung der Messerklinge und Reduzierung der mit dem Enthäutegut in Kontakt tretenden Messer-Rückenfläche ist vorzugsweise vorgesehen, daß der die Messerklinge aufnehmende Führungsschlitz einerseits von der Rückenfläche des Andrückschuhes und andererseits durch eine Abdeckung gebildet ist , wobei diese mindestens ein Führungselement aufweist, welches den Führungsschlitz durchsetzt und je in einen langlochartigen Durchbruch in der Messerklinge hineinragt.

Um ein einfaches Auswechseln der Messerklinge zu ermöglichen, ist jedes Führungselement im Bereich des in den Führungsschlitz hineinragenden Teils an den in Oszillationsrichtung weisenden Flanken angefast, und aus dem Bereich des Führungsschlitzes gegen Federkraft verdrängbar ausgebildet , wobei jeder Durchbruch zu der Schneide der Messerklinge parallel verlaufend ausgerichtet sein kann.

Im Hinblick darauf, daß der Grad der Strapazierung des Enthäutegutes eine Funktion des durch die Messerklinge ausgeübten Schnittdruckes ist, ergibt sich die Möglichkeit einer Reduzierung desselben dadurch, daß jeder Durchbruch zu der Schneide der Messerklinge geneigt verlaufend ausgerichtet ist, wodurch sich der Messerklinge eine zusätzliche Oszillationskomponente mitteilt, die dem Enthäutegut entgegengerichtet ist. Ein weitgehend querkraftfreier Antrieb der Messerklinge kann dadurch erreicht werden, daß der die Oszillationsbewegung der Messerklinge erzeugende Antrieb einen Kurbeltrieb mit zwei synchron gegenläufig zueinander umlaufenden Kurbelscheiben umfaßt, deren Kurbelzapfen je mittels Kurbellenker mit einem Joch verbunden sind, welches an einem Ende der Messerklinge angeordnet ist.

Für einen störungsfreien Beginn und Ablauf des Enthäuteprozesses ist dadurch gesorgt, daß die Mantelfläche der Enthäutewalze mit im wesentlichen längs der Mantellinien sich erstreckenden Längsnuten versehen ist.

Die Erfindung wird nachfolgend anhand der Zeichnung näher erläutert.

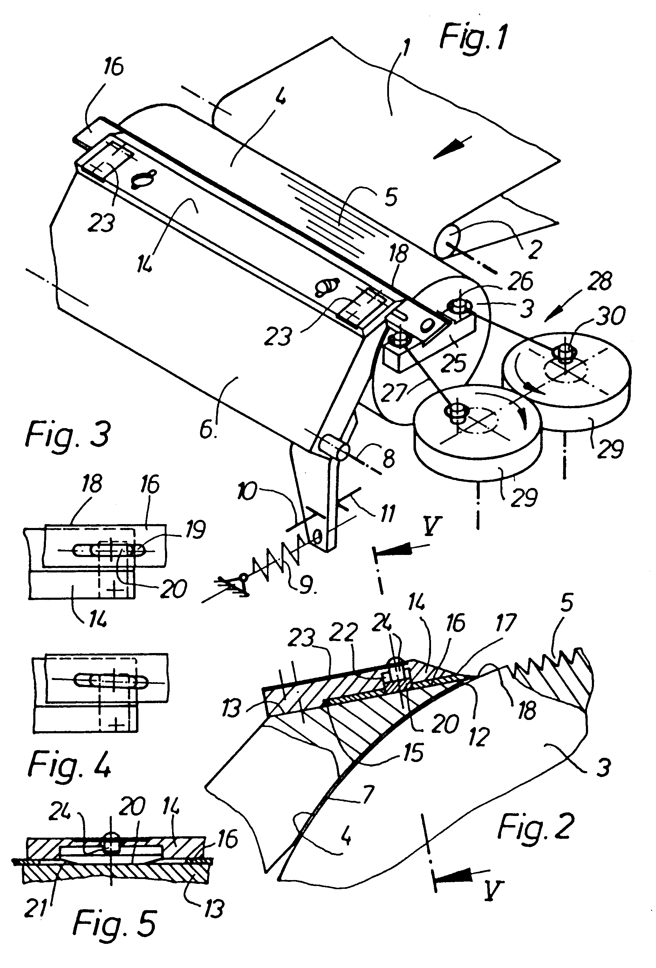

Es zeigt
- Fig. 1: eine Teilansicht der Gesamtvorrichtung in vereinfachter axonometrischer Darstellung,
- Fig. 2: einen Teilquerschnitt durch die Vorrichtung im Bereich eines Führungselementes der Messerklinge,
- Fig. 3: eine ausschnittweise Draufsicht auf die Innenfläche der die Messerklinge führenden Abdeckung im Bereich eines Führungselementes,
- Fig. 4: eine ausschnittweise Draufsicht entsprechend Fig. 3 mit schräggestelltem Führungselement,
- Fig. 5: einen Schnitt entlang der Schnittlinie V - V nach Fig. 2 .

In einem nicht dargestellten Gestell einer Enthäutemaschine für Fischfilets sind die ablaufseitige Umlenkwalze 2 eines endlosen Zuführbandes 1 sowie eine Enthäutewalze 3 gelagert und in geeigneter Weise gleichsinnig umlaufend angetrieben. Die Enthäutewalze 3 ist an ihrer Mantelfläche 4 in bekannter Weise mit Längsnuten 5 versehen. Der Mantelfläche 4 der Enthäutewalze 3 ist im Bereich ihrer ablaufenden Seite ein Andrückschuh 6 mit einer Abdrückfläche 7 gegenübergestellt, deren Krümmungsradius im wesentlichen dem der Mantelfläche 4 der Enthäutewalze 3 entspricht. Der sich über die ganze Länge der letztgenannten erstreckende Andrückschuh 6 ist um eine Achse 8 gegen die Kraft einer Feder 9 von der Enthäutewalze 3 weg verdrängbar und mittels eines einstellbaren Anschlages 10 bezüglich der Spaltweite zwischen seiner Andrückfläche 7 und der Mantelfläche 4 in seiner Grundstellung abgestützt. Mit einem weiteren Anschlag 11 wird der entgegengerichtete Schwenkweg begrenzt. Der Andrückschuh 6 wird nach oben durch eine Rückenfläche 13 begrenzt, welche sich parallel zu der Mantelfläche 4 der Enthäutewalze 3 erstreckt und mit dem oberen Endbereich der Andrückfläche 7 einen spitzen Winkel bildet, dessen Scheitelkante 12 abgestumpft ist. Die Rückenfläche 13 trägt eine Abdeckung 14 mit einer Absetzung, welche mit der Rückenfläche 13 einen Führungsschlitz 15 zur Führung einer Messerklinge 16 bildet. Die Abdeckung 14 ist an ihrem der Enthäutewalze 3 zuweisenden Teil der Oberfläche abgefast und bildet mit der Oberseite des Führungsschlitzes 15 eine gestumpfte Kante 17 , die der Scheitelkante 12 gegenübersteht. Die Messerklinge 16 ist aus Bandstahl gefertigt und in ihrer Breite so dimensioniert, daß ihre Schneide 18 vor der Kante 17 bzw. Scheitelkante 12 vorsteht. Die Messerklinge 16 ist im Bereich ihrer Enden je mit einem in Längserstreckung verlaufenden, langlochartigen Durchbruch 19 versehen, in welchen ein Führungselement 20 greift, das in einer entsprechenden Aussparung 22 in der Abdeckung 14 geführt mittels eines Federblattes 23 über einen Druckstift 24 gegen die Rückenfläche 13 des Andrückschuhs 6 die Messerklinge 16 durchgreifend angedrückt gehalten wird. Jedes Führungselement 20 ist an seinem in den Führungsschlitz 15 hineinragenden Teil an den in Oszillationsrichtung weisenden Flanken mit Anfasungen 21 von mindestens der Dicke der Messerklinge 16 versehen. Das eine Ende derselben ist an einem Joch 25 angeschlagen, welches auf einer nicht gezeigten Gleitfläche ruht und mit zwei Kurbelzapfen 26 versehen ist, an denen jeweils ein Kurbellenker 27 eines doppelten Kurbeltriebes 28 aus zwei synchron gegenläufig umlaufend angetriebenen Kurbelscheiben 29 mit Kurbelzapfen 30 angreifen.

Die Wirkungsweise der Vorrichtung ist folgende:
Ein zu enthäutendes Filet wird mit der Hautseite aufliegend und dem Schwanzende voraus mittels des Zuführbandes 1 auf die Mantelfläche 4 der umlaufenden Enthautwalze 3 gebracht und von dieser weitergefördert. Dabei lagert sich das Schwanzende in den Längsnuten 5 der Mantelfläche 4 ein und gelangt so unter die Schneide 18 der Messerklinge 16 und kurz darauf mit den bereits gelösten Teilen der Haut in den Spalt zwischen der Abdrückfläche 7 und der Mantelfläche 4, was spontan zu einem sicher fördernden Angriff an der jeweils freigeschnittenen Haut führt. Dabei erfährt der Andrückschuh 6 eine Auftriebskraft, welche nach Überwindung der Kraft der Feder 9 bewirkt, daß die Andrückfläche 7 auf der Innenfläche der zähen Haut gleitet und durch Mitnahme der Messerklinge 16 deren Schneide 18 in einen Abstand zu der Mantelfläche 4 bringt, die jeweils der Stärke der abzutrennenden Haut entspricht.

Um eine rationellere Nutzung der Messerklinge 16 zu ermöglichen, kann diese als Wendeklinge ausgebildet sein, indem ihre beiden Längsseiten mit einer Schneide versehen werden. Zum Wenden bzw. Auswechseln der Messerklinge 16 ist lediglich die Verbindung zwischen dieser und dem Joch 25 zu lösen, worauf sich die Messerklinge 16 unter Verdrängen der Führungselemente 20 über die Anfasungen 21 aus dem Führungsschlitz 15 in Richtung auf den Kurbeltrieb 28 herausziehen läßt. Eine einzusetzende Messerklinge 16 wird entsprechend eingeschoben, bis die Führungselemente 20 in die Durchbrüche 19 einrasten, und sodann mit dem Joch 25 verbunden.

## Patentansprüche

1. Vorrichtung zum Abtragen einer die Haut einschließenden Schicht von den Filets von Fischen, mit einer umlaufend angetriebenen, an ihrer Mantelfläche (4) griffig ausgebildeten Enthäutewalze (3) , mit einem mit seiner Schneide (18) gegen die Drehrichtung der Enthäutewalze (3) weisenden, der Mantelfläche (4) der Enthäutewalze (3) gegenüberstehenden, oszillierend angetriebenen Enthäutemesser (16) und mit einem in Umlaufrichtung der Enthäutewalze (3) hinter der Schneide des Enthäutemessers (16) angeordneten Andrückschuh (6) mit einer der Mantelfläche (4) der Enthäutewalze (3) gegenüberstehenden Andrückfläche (7) , **dadurch gekennzeichnet,** daß der Andrückschuh (6) bezüglich des Abstandes der Andrückfläche (7) zu der Mantelfläche (4) der Enthäutewalze (3) zwischen einstellbaren Anschlägen (10 u. 11) bewegbar ist und gegen die Kraft einer Feder (9) , die ihn in Richtung auf die Enthäutewalze (3) belastet und vor dem Durchgang eines Filets an einem der Anschläge in seiner Grundstellung hält, durch das abgetrennte Hautteil des Filets von dieser Grundstellung verdrängbar ist, und daß das Enthäutemesser (16) als Messerklinge ausgebildet ist, die in einem Führungsschlitz (15) geführt ist, der Bestandteil des Andrückschuhs (6) ist und aus dem die Messerklinge mit seiner Schneide vorsteht, wodurch nur ein kleiner Teil der oszillierenden Flächen des Messers angreift.

2. Vorrichtung nach den Ansprüchen 1 oder 2 , **gekennzeichnet dadurch,** daß der die Messerklinge (16) aufnehmende Führungsschlitz (15) einerseits von der Rückenfläche (13) des Andrückschuhs (6) und andererseits durch eine Abdeckung (14) gebildet ist , wobei diese mindestens ein Führungselement (20) aufweist, welches den Führungsschlitz (15) durchsetzt und je in einen langlochartigen Durchbruch (19) in der Messerklinge (16) hineinragt.

3. Vorrichtung nach Anspruch 2 , **gekennzeichnet dadurch,** daß jedes Führungselement (20) im Bereich des in den Führungsschlitz (15) hineinragenden Teils an den in Oszillationrichtung weisenden Flanken Anfasungen (21) aufweist, und aus dem Bereich des Führungsschlitzes (15) gegen eine Federkraft verdrängbar ausgebildet ist.

4. Vorrichtung nach den Ansprüchen 3 oder 4 , **gekenzeichnet dadurch,** daß jeder Durchbruch (19) zu der Schneide (18) der Messerklinge (16) parallel verlaufend ausgerichtet ist.

5. Vorrichtung nach den Ansprücheb 3 oder 4 , **gekennzeichnet dadurch,** daß jeder Durchbruch (19) zu der Schneide (18) der Messerklinge (16) geneigt verlaufend ausgerichtet ist.

6. Vorrichtung nach einem der vorhergehenden Ansprüche, **gekennzeichnet dadurch,** daß der die Oszillationsbewegung der Messerklinge (16) erzeugende Antrieb einen Kurbeltrieb (28) mit zwei synchron gegenläufig zueinander umlaufenden Kurbelscheiben (29) umfaßt, deren Kurbelzapfen (30) je mittels Kurbellenker (27) mit einem Joch (25) verbunden sind, welches an einem Ende der Messerklinge (16) angeordnet ist.

7. Vorrichtung nach Anspruch 1 , **gekennzeichnet dadurch,** daß die Mantelfläche (4) der Enthäutewalze (3) mit im wesentlichen längs der Mantellinien sich erstreckenden Längsnuten (5) versehen ist.

## Claims

1. Device for the removal of a layer, which includes the skin, from the filets of fish, with a skinning roller (3) which is driven to rotate and is formed at its circumferential surface (4) to be gripping, with a skinning knife (16), which is driven to oscillate, is disposed opposite the circumferential surface (4) of the skinning roller (3) and points by its cutting edge (18) against the direction of rotation of the skinning roller (3), and with a pressing-on shoe (6), which is arranged behind the cutting edge of the skinning knife (16) in the rotational direction of the skinning roller (3), with a pressing-on surface (7) disposed opposite the circumferential surface (4) of the skinning roller (3), characterised thereby that the pressing-on shoe (6) is movable between adjustable abutments (10 and 11) with respect to the spacing of the pressing-on surface (7) from the circumferential surface (4) of the skinning roller (3) and is displaceable against the force of a spring (9), which loads it in direction towards the skinning roller (3) and holds it at one of the abutments in its basic setting before the passage of a filet, out of this basic setting by the separate skin part of the filet, and that the skinning knife (16) is constructed as a knife blade which is guided in a guide slot (15), which is a component of the pressing-on shoe (6) and from which the knife blade projects by its cutting edge, whereby only a small part of the oscillating surface of the knife engages.

2. Device according to claims 1 or 2, characterised thereby that guide slot (15) receiving the knife blade (16) is formed on the one hand by the back surface (13) of the pressing-on shoe (6) and on the other hand by a cover (14), wherein this has at least one guide element (20), which penetrates the guide slot (15) and projects into a respective slot-like opening (19) in the knife blade (16).

3. Device according to claim 2, characterised thereby that each guide element (20) has chamfers (21) in the region of the part projecting into the guide slot (15) and at the flanks facing in oscillation direction, and is constructed to be displaceable out of the region of the guide slot (15) against a spring force.

4. Device according to claims 3 or 4, characterised thereby that each opening (19) is aligned to extend parallel to the cutting edge (18) of the knife blade (16).

5. Device according to claims 3 or 4, characterised thereby that each opening (19) is aligned to extend inclined to the cutting edge (18) of the knife blade (16).

6. Device according to one of the preceding claims, characterised thereby that the drive producing the oscillating movement of the knife blade (16) comprises a crank drive (28) with two synchronously and mutually oppositely rotating crank discs (29), the crankpins (30) of which are each connected by means of a respective crank link (27) with a yoke (25), which is arranged at one end of the knife blade (16).

7. Device according to claim 1, characterised thereby that the circumferential surface (4) of the skinning roller (3) is provided with longitudinal grooves (5) extending substantially along the surface line.

## Revendications

1. Dispositif destiné à retirer sur des filets de poissons, une couche englobant la peau, comportant un cylindre à dépouiller (3) entraîné en rotation et présentant une configuration agrippante sur sa surface périphérique (4), comportant un couteau à dépouiller (16) entraîné en un mouvement oscillant, faisant face à la surface périphérique (4) du cylindre à dépouiller (3), et dont l'arête de coupe (18) est dirigée à l'encontre du sens de rotation du cylindre à dépouiller (3), ainsi qu'un patin d'application (6) disposé derrière l'arête de coupe du couteau à dépouiller (16) et comportant une surface d'application (7) faisant face à la surface périphérique (4) du cylindre à dépouiller (3), caractérisé en ce que le patin d'application (6), quant à la distance de la surface d'application (7) à la surface périphérique (4) du cylindre à dépouiller (3), est mobile entre des butées (10 et 11) réglables, et peut être repoussé, contre la force d'un ressort (9) qui le sollicite en direction du cylindre à dépouiller (3) et le maintient dans sa position de base contre l'une des butées avant le passage d'un filet, hors de cette position de base par la partie de peau du filet ayant été retirée, et en ce que le couteau à dépouiller (16) est réalisé en tant que lame de coupe, qui est guidée dans une fente de guidage (15) faisant partie intégrante du patin d'application (6) et de laquelle fait saillie la lame de coupe avec son arête de coupe, seule une petite partie des surfaces oscillantes du couteau étant ainsi active.

2. Dispositif selon la revendication 1 ou 2, caractérisé en ce que la fente de guidage (15) recevant la lame de coupe (16) est formée, d'une part par la surface dorsale (13) du patin d'application (6), et d'autre part par un élément de recouvrement (14), celui-ci présentant au moins un élément de guidage (20) qui traverse la fente de guidage (15), chacun de ces éléments de guidage s'engageant dans une ouverture de passage (19) en forme de trou allongé, dans la lame de coupe (16).

3. Dispositif selon la revendication 2, caractérisé en ce que chaque élément de guidage (20) comporte des chanfreins (21) dans la zone de la partie s'engageant dans la fente de guidage (15), sur les flancs orientés dans la direction d'oscillation, et est conçu de manière à pouvoir être repoussé de la zone de la fente de guidage (15), contre une force de ressort.

4. Dispositif selon les revendications 3 ou 4, caractérisé en ce que chaque ouverture de passage (19) est orientée de manière à s'étendre parallèlement à l'arête de coupe (18) de la lame de coupe (16).

5. Dispositif selon les revendications 3 ou 4, caractérisé en ce que chaque ouverture de passage (19) est orientée de manière à s'étendre de façon oblique par rapport à l'arête de coupe (18) de la lame de coupe (16).

6. Dispositif selon l'une des revendications précédentes, caractérisé en ce que le mécanisme d'entraînement produisant le mouvement oscillatoire de la lame de coupe (16), comprend un système d'entraînement à manivelle (28) comportant deux disques à manivelle (29) en rotation en sens inverse l'un de l'autre et de manière synchronisée, dont les tourillons de manivelle (30) sont reliés chacun par une biellette de manivelle (27), à une traverse (25) disposée à l'une des extrémités de la lame de coupe (16).

7. Dispositif selon la revendication 1, caractérisé en ce que la surface périphérique (4) du cylindre à dépouiller (3) est pourvue de rainures longitudinales (5) s'étendant sensiblement le long des génératrices.
